# EUROPÄISCHE PATENTSCHRIFT

(11) **EP 2 660 663 B1**
(45) Veröffentlichungstag und Bekanntmachung des Hinweises auf die Patenterteilung: **09.05.2018**
(21) Anmeldenummer: 13159566.2
(22) Anmeldetag: 15.03.2013
(51) Int. Cl.: G05B 9/02, H01H 47/00

(54) **Sicherheitsschaltung und Sicherheitsschaltgerät mit einer Sicherheitsschaltung**
Safety circuit and safety switching device with a safety circuit
Circuit de sécurité et appareil de commutation de sécurité doté d'un circuit de sécurité

(30) Priorität: 16.03.2012 DE 102012102220
(43) Veröffentlichungstag der Anmeldung: 06.11.2013
(73) Patentinhaber: PHOENIX CONTACT GmbH & Co. KG, 32825 Blomberg (DE)
(72) Erfinder: Rohs, Markus, 32825 Blomberg (DE); Eilers, Markus, 31812 Bad Pyrmont (DE); Peter, Henry, 37574 Einbeck (DE)
(74) Vertreter: Michalski Hüttermann & Partner Patentanwälte mbB

(56) Entgegenhaltungen:
- EP-A1- 2 461 341
- WO-A1-01/37302
- WO-A1-01/39229
- DE-A1- 10 108 946

## Beschreibung

Die vorliegende Erfindung betrifft eine Sicherheitsschaltung zur Realisierung einer Sicherheitsfunktion mit einem ersten und einem zweiten Relais, die an ihren Kontakten in Reihe geschaltet sind, wobei die Sicherheitsschaltung ausgeführt ist, die Relais über ein gemeinsames Schaltsignal zu steuern, um die Sicherheitsfunktion zu realisieren. Außerdem betrifft die Erfindung ein Sicherheitsschaltgerät mit einer solchen Sicherheitsschaltung.

In der Sicherheitstechnik ist eine Reihenschaltung von zwei Relais, die meist als Schließer ausgeführt sind, an ihren Kontakten verbreitet, um eine Sicherheitsfunktion in einem Strompfad einer Maschine oder einer Anlage zu realisieren. Die beiden Relais sind in der Reihenschaltung mit ihren Kontakten in dem Strompfad positioniert und werden gemeinsam über ein Schaltsignal gesteuert, um den Strompfad zu verbinden bzw. zu unterbrechen. Das Schaltsignal ist beispielsweise durch das Anlegen eines Spannungspegels definiert, wobei die beiden Relais durch das Schaltsignal gemeinsam gesteuert werden, um während des anliegenden Spannungspegels den Strompfad zu verbinden.

Infolge der Schaltvorgänge kommt es bei den Relais zu einer Abnutzung, die bis zum Ausfall eines Relais führen kann. Beim Ausfall eines Relais kann durch das jeweils andere Relais der Strompfad unterbrochen werden, so dass die Sicherheitsfunktion gewährleistet ist. Im Fehlerfall ist außerdem vorgesehen, dass die Sicherheitsschaltung nicht erneut angesteuert werden kann, bevor das defekte Relais ausgetauscht worden ist, um einen zusätzlichen Ausfall des zweiten Relais mit einem Ausfall der Sicherheitsfunktion insgesamt zu vermeiden. Der besonders ungünstige Fall des gleichzeitigen Ausfalls beider Relais kann dazu führen, dass die Sicherheitsfunktion der Sicherheitsschaltung nicht mehr sichergestellt ist. Der gleichzeitige Ausfall beider Relais wird durch einen common cause-Faktor stochastisch erfasst und hat Einfluss auf die erreichbare Sicherheitsanforderungsstufe, auch als Sicherheitsintegritätslevel (SIL) bezeichnet.

Nachteilig an derartigen Sicherheitsschaltungen ist, dass der Ausfall der Relais über eine statistische Wahrscheinlichkeit hinaus nicht vorhergesagt werden kann. Somit müssen zur Sicherstellung eines ausreichenden SIL-Levels langlebige Relais verwendet werden, wodurch die Sicherheitsschaltung hohe Kosten verursacht. Auch ist die Instandhaltung derartiger Sicherheitsschaltungen dadurch erschwert, dass der Austausch der Relais aufwändig ist, da zunächst das fehlerhafte Relais identifiziert werden muss. Um im Fehlerfall die Maschine bzw. Anlage schnell weiter betreiben zu können, werden daher ganze Sicherheitsschaltungen oder auch diese umfassende Sicherheitsschaltgeräte zum Austausch vorgehalten, was mit hohen Kosten verbunden ist.

Aus der EP 2 461 341 A1 ist ein fehlersicheres Schaltmodul mit zwei Relais bekannt. Die Relais sind jeweils mit einem Transistor in Reihe geschaltet, wobei die Transistoren jeweils über eine Verzögerungsschaltung angesteuert werden. Dadurch wird bei Ansteuerung durch eine Spannung U eine verzögerte Ansteuerung der Relais bewirkt, so dass ein Relais als lastfreies Relais gegenüber dem zweiten Relais als Lastrelais zuerst leitend geschaltet und verzögert gesperrt wird.

Weiter ist aus der WO 01/37302 A1 ein Sicherheitsschaltgerät zum Ein- und sicheren Ausschalten einer elektrisch angetriebenen Maschine bekannt. Das Sicherheitsschaltgerät weist ein erstes und ein zweites elektromechanischen Schaltelement auf, deren Arbeitskontakte in Reihe zueinander zwischen einer ersten Eingangsklemme und einer Ausgangsklemme angeordnet sind. Das Schaltgerät weist eine zweite Eingangsklemme für ein Schaltsignal Us auf, das auf die Schaltstellung der Arbeitskontakte der beiden Schaltelemente einwirkt. Ein Zeitglied bewirkt, dass das Schaltsignal beim Einschalten auf die Arbeitskontakte des ersten Schaltelements früher und beim Ausschalten später einwirkt als auf die Arbeitskontakte des zweiten Schaltelements.

Aufgabe der vorliegenden Erfindung ist es daher, die oben angegebene Sicherheitsschaltung und das oben angegebene Sicherheitsschaltgerät dahingehend zu verbessern, dass ein hoher Sicherheitsintegritätslevel erreicht wird, Wartung und Reparatur erleichtert und die Herstellungskosten reduziert werden.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß erfolgt die Lösung der Aufgabe durch eine Sicherheitsschaltung zur Realisierung einer Sicherheitsfunktion mit einem ersten und einem zweiten Relais, deren Kontakte in Reihe geschaltet sind, wobei die Sicherheitsschaltung ausgeführt ist, die Relais über ein gemeinsames Schaltsignal zu steuern, um die Sicherheitsfunktion zu realisieren, die Sicherheitsschaltung ausgeführt ist, beim Ende des Anlegens des Schaltsignals das zweite Relais mit einer Abschaltverzögerung gegenüber dem ersten Relais zu schalten, die Sicherheitsschaltung eine Ansteuerschaltung umfasst, die ausgeführt ist, das Ende des Anlegens des Schaltsignals an dem zweiten Relais gegenüber dem ersten Relais zu verzögern, und die Ansteuerschaltung eine erste und eine zweite Freilaufschaltung umfasst, die entsprechend parallel zu dem ersten und zweiten Relais angeordnet sind, wobei die erste Freilaufschaltung schneller als die zweite Freilaufschaltung ausgeführt ist.

Erfindungsgemäß ist weiterhin ein Sicherheitsschaltgerät mit einer vorgenannten Sicherheitsschaltung vorgesehen.

Grundidee der vorliegenden Erfindung ist es somit, die Sicherheitsschaltung derart auszuführen, dass das erste Relais als Opferrelais ausgeführt ist, welches bei Schaltvorgängen die Last trägt und potentielle Gefahren, zum Beispiel durch Kurzschluss, kapazitive Lasten, Abbrand und/oder Funkenbildung, ausschließlich auf das Opferrelais einwirken. Das zweite Relais dient als Zusatzrelais, welches bei korrekter Funktion des Opferrelais ohne Last schaltet, bis das Opferrelais versagt. Abnutzung und Verschleiß treten an dem Zusatzrelais durch das lastfreie Schalten praktisch nicht auf. Somit ist ein gleichzeitiger Ausfall beider Relais weitgehend ausgeschlossen, wodurch ein guter common cause-Faktor und dadurch ein hoher Sicherheitsintegritätslevel erreicht werden. Sobald das Opferrelais versagt, übernimmt das Zusatzrelais die Aufgabe, die Sicherheitsfunktion zu realisieren und eine Maschine oder Anlage in einen sicheren, ausgeschalteten Zustand zu überführen. Das Zusatzrelais muss für weniger Schaltvorgänge ausgelegt werden, so dass es kostengünstig hergestellt werden kann. Auch das Opferrelais kann einfach und kostengünstig ausgeführt sein, da sichergestellt ist, dass es nicht zur gleichen Zeit wie das Zusatzrelais ausfällt. Im Betrieb tragen beide Relais den Laststrom, wie sich durch ihre Reihenschaltung ergibt. Dabei erfolgt jedoch praktisch keine Abnutzung bzw. kein Verschleiß. Die Wartung der Sicherheitsschaltung bzw. des Sicherheitsschaltgeräts wird erleichtert, da der Ausfall eines Relais üblicherweise das Opferrelais betrifft, so dass eine aufwändige Fehlersuche entfallen kann. Ein Vorhalten vollständiger Sicherheitsschaltungen bzw. Sicherheitsschaltgeräte, das mit hohen Kosten verbunden ist und Lagerplatz erfordert, kann unterbleiben. Durch den einfachen und somit schnellen Austausch reduzieren sich Stillstandszeiten der Anlagen und eine mittlere Reparaturzeit. Die beiden Relais sind durch ihre Funktion als Opferrelais bzw. Zusatzrelais zu unterscheiden. Sie können diversitär oder redundant ausgebildet sein. Die Art der verwendeten Relais ist prinzipiell beliebig und kann sowohl Schließer wie auch Öffner umfassen, wobei die Grundprinzipien der Erfindung entsprechend anzuwenden sind, um jeweils das Opferrelais unter Last zu schalten. Für die Sicherheitsschaltung ist es prinzipiell unerheblich, ob das erste oder das zweite Relais als Opferrelais bzw. Zusatzrelais ausgeführt ist. Einschalt- und Abschaltverzögerung beziehen sich auf eine zeitliche Verzögerung der Schaltvorgänge der beiden Relais und können unterschiedlich ausgeführt sein. Die Verzögerungen sind dabei so auszuführen, dass die Sicherheitsfunktion der Sicherheitsschaltung nicht beeinträchtigt, das heißt möglichst kurz. Die Art des Schaltsignals kann beliebig sein, wobei jedoch ein gegenüber der Masse erhöhter Spannungspegel in der Sicherheitsschalttechnik häufig verwendet wird, um bei einem Fehler in einem Signalpfad des Schaltsignals die Anlage sicher abschalten zu können. Entsprechend wird ein Strompfad, in dem die Relais positioniert sind, üblicherweise durch das Anlegen des Schaltsignals leitend geschaltet, um eine Maschine oder Anlage zu versorgen. Die Vorteile in der Sicherheitsschaltung können sowohl beim Anlegen des Schaltsignals auch bei dessen Ende unabhängig voneinander realisiert werden. Die erfindungsgemäße Sicherheitsschaltung ist zum Austausch bestehender Sicherheitsschaltungen geeignet, da sie identisch verwendet wird.

Durch die Ansteuerschaltung wird zuerst das Opferrelais derart angesteuert, dass es den Strompfad unterbricht und damit die Last des Schaltvorgangs trägt. Das Zusatzrelais wird mit einer Verzögerung angesteuert.

Die Freilaufschaltung umfasst üblicherweise wenigstens eine Diode und dient dem Schutz des jeweiligen Relais vor Überspannungen, insbesondere durch induktive Lasten. Durch eine geeignete Wahl der Freilaufschaltung, beispielsweise einer Freilaufdiode und einer entgegengesetzt in Reihe geschalteten Zenerdiode an dem Opferrelais und einer einfachen Freilaufdiode an dem Zusatzrelais, wird bewirkt, dass die Spannung an dem Opferrelais größer als die an dem Zusatzrelais ist. Es ergibt sich eine schnellere Freilaufschaltung für das Opferrelais, wodurch dieses vor dem Zusatzrelais geschaltet wird, um den Strompfad zu unterbrechen.

In einer bevorzugten Ausführungsform der Erfindung ist vorgesehen, dass die Sicherheitsschaltung weiter ausgeführt ist, beim Anlegen des Schaltsignals das erste Relais mit einer Einschaltverzögerung gegenüber dem zweiten Relais zu schalten.

In einer bevorzugten Ausführungsform der Erfindung ist vorgesehen, dass die Merkmale der beiden vorgenannten Sicherheitsschaltungen in einer Sicherheitsschaltung kombiniert sind. Entsprechend ist die Sicherheitsschaltung ausgeführt, beim Anlegen des Schaltsignals das erste Relais mit einer Einschaltverzögerung gegenüber dem zweiten Relais zu steuern und beim Ende des Anlegens des Schaltsignals das zweite Relais mit einer Abschaltverzögerung gegenüber dem ersten Relais zu schalten. Dadurch können die Vorteile der beiden Sicherheitsschaltungen kombiniert werden, so dass sich insgesamt eine Sicherheitsschaltung mit einem einzelnen Opferrelais ergibt, welches sowohl bei Einschaltwie auch bei Ausschaltvorgängen die Last trägt und einer Abnutzung unterliegt. Damit ist die Lebensdauer des Zusatzrelais gegenüber dem Opferrelais weiter erhöht.

In vorteilhafter Ausgestaltung der Erfindung ist vorgesehen, dass die Sicherheitsschaltung eine Ansteuerschaltung umfasst, die ausgeführt ist, das Schaltsignal an dem ersten Relais gegenüber dem zweiten Relais mit der Einschaltverzögerung anzulegen. Entsprechend kann die Sicherheitsschaltung wie üblich durch ein einzelnes Schaltsignal gesteuert werden, so dass auch bestehende Sicherheitsschaltungen ohne Weiteres gegen die erfindungsgemäße Sicherheitsschaltung ausgetauscht werden können. Durch die Ansteuerschaltung wird auf einfache konstruktive Weise sichergestellt, dass das erste Relais als Opferrelais und das zweite Relais als Zusatzrelais verwendet wird.

In vorteilhafter Ausgestaltung der Erfindung ist vorgesehen, dass die Ansteuerschaltung einen elektrischen Schalter und ein Verzögerungsglied aufweist und ausgeführt ist, den elektrischen Schalter über das Verzögerungsglied zeitverzögert durch das Schaltsignal zu steuern, wobei der elektrische Schalter in einer ersten Signalleitung des Schaltsignals zu dem ersten Relais angeordnet ist. Während der elektrische Schalter geöffnet ist, kann das Schaltsignal nicht an das Opferrelais angelegt werden. Als Verzögerungsglied ist beispielsweise ein RC-Glied im Stand der Technik bekannt. Die Last des elektrischen Schalters ist durch das Schaltsignal definiert und üblicherweise gering, so dass der Schalter einfach und klein ausgeführt sein kann.

In weiterer Ausgestaltung der Erfindung ist vorgesehen, dass der elektrische Schalter einen Transistor, insbesondere ein Feldeffekttransistor, umfasst. Derartige Transistoren sind kostengünstig und langlebig und ermöglichen einen kompakten Aufbau des Schalters und damit der Sicherheitsschaltung.

In weiterer Ausgestaltung der Erfindung ist vorgesehen, dass der elektrische Schalter einen Optokoppler umfasst. Dadurch kann eine galvanische Trennung zwischen einem Schaltpfad des elektrischen Schalter, d.h. der ersten Signalleitung, und dessen Ansteuerung realisiert werden.

In weiterer Ausgestaltung der Erfindung ist vorgesehen, dass der elektrische Schalter als Hilfsrelais ausgeführt ist. Das Relais wird über das Schaltsignal gesteuert, um das Anlegen des Schaltsignals an dem Opferrelais zu unterbrechen. Das Relais weist eine Schaltzeit auf, durch die das Schaltsignal bereits mit einer Verzögerung an dem Opferrelais angelegt wird. Zur Realisierung der Einschaltverzögerung ist somit vorzugsweise ein langsames Hilfsrelais gewählt.

In vorteilhafter Ausgestaltung der Erfindung ist vorgesehen, dass das erste und das zweite Relais derart ausgeführt sind, dass das erste Relais einen Schaltvorgang beim Ende des Anlegens des Schaltsignals schneller durchführt als das zweite Relais. Opferrelais und Zusatzrelais sind also unterschiedlich ausgeführt, um entsprechend zu bewirken, dass das Opferrelais beim Ende des Anlegens des Schaltsignals zuerst schaltet, und damit die Last trägt. Dazu können die Relais beispielsweise mit unterschiedlichen Ansprech- bzw. Rückfallzeiten, mit unterschiedlichen Spulenrückfallspannungen oder mit unterschiedlichen Halteleistungen ausgeführt sein. Beispielsweise wird die Halteleistung des Opferrelais stärker abgesenkt, als die des Zusatzrelais. Dadurch fällt das Opferrelais bei einer Abschaltung schneller ab. Alternativ oder zusätzlich kann die Spulenrückfallspannung des Opferrelais höher gewählt werden als die des Zusatzrelais, wodurch das Opferrelais bei der Abschaltung früher schaltet. Alternativ oder zusätzlich kann weiterhin als Opferrelais ein schnelleres Relais, also ein Relais mit einer kürzeren Rückfallzeit, gewählt werden.

In einer vorteilhaften Ausgestaltung der Erfindung ist vorgesehen, dass die Ansteuerschaltung einen ersten und einen zweiten Vorwiderstand umfasst, die entsprechend in Signalleitungen für das Schaltsignal zu dem ersten und zweiten Relais angeordnet sind, wobei der erste Vorwiderstand größer als der zweite Vorwiderstand ist. Durch die Vorwiderstände ergibt sich eine unterschiedlich starke Absenkung des Schaltsignals an den beiden Relais, so dass die Schaltschwelle jeweils unterschiedlich erreicht wird. Durch den größeren Vorwiderstand in der Signalleitung des Opferrelais fließt ein geringerer Strom durch dieses, so dass das Opferrelais beim Ende des Anlegens des Schaltsignals zuerst den Strompfad unterbricht.

In weiterer Ausgestaltung der Erfindung ist vorgesehen, dass die Ansteuerschaltung einen Energiespeicher umfasst der ausgeführt und angeordnet ist, um das Schaltsignal an dem zweiten Relais zu puffern. Durch die Pufferung wird das Schaltsignal an dem Zusatzrelais aufrechterhalten, so dass es nach dem Opferrelais schaltet.

In vorteilhafter Ausgestaltung der Erfindung ist vorgesehen, dass die Ansteuerschaltung als Analogschaltung ausgeführt ist, die insbesondere aus einfachen Bauteilen im Sinne der IEC 61508 aufgebaut ist. Durch die Verwendung von einfachen Bauelementen kann die Ansteuerschaltung einfach und schnell realisiert werden, ohne dass eine aufwändige Programmierung beispielsweise eines Mikrocontrollers erforderlich ist. Somit werden Entwicklungsaufwände reduziert und die Verfügbarkeit im Feld erhöht.

In vorteilhafter Weiterbildung der Erfindung ist vorgesehen, dass das erste Relais derart ausgeführt und angeordnet ist, dass es schnell und einfach austauschbar ist. Da das Opferrelais Verschleiß und Abnutzung unterliegt und entsprechend häufig auszutauschen ist, ist es vorteilhaft, dieses so anzuordnen, dass ein einfacher Austausch möglich ist. Damit kann die Sicherheitsschaltung entsprechend ausgeführt werden, um den Aufwand bei der Wartung bzw. dem Austausch der Relais zu reduzieren.

Nachfolgend wird die Erfindung unter Bezugnahme auf die anliegende Zeichnung anhand bevorzugter Ausführungsformen näher erläutert.

Es zeigen
- Fig. 1: ein Zeitdiagramm mit einem Schaltsignal und den Schaltzuständen von zwei Relais einer erfindungsgemäßen Sicherheitsschaltung gemäß der Grundidee der Erfindung,
- Fig. 2: einen Schaltplan einer Sicherheitsschaltung mit zwei Relais und einer Ansteuerschaltung gemäß einer ersten Ausführungsform der Erfindung,
- Fig. 3: eine Teilansicht eines Schaltplans mit einem ersten Relais und einer darauf wirkenden Ansteuerschaltung gemäß einer zweiten Ausführungsform der Erfindung,
- Fig. 4: eine Teilansicht eines Schaltplans mit einem ersten Relais und einer darauf wirkenden Ansteuerschaltung gemäß einer dritten Ausführungsform der Erfindung,
- Fig. 5: einen Schaltplan einer Sicherheitsschaltung mit zwei Relais und einer Ansteuerschaltung gemäß einer vierten Ausführungsform der Erfindung,
- Fig. 6: einen Schaltplan einer Sicherheitsschaltung mit zwei Relais und einer Ansteuerschaltung mit unterschiedlichen Freilaufschaltungen der Relais gemäß einer fünften Ausführungsform der Erfindung,
- Fig. 7: einen Schaltplan einer Sicherheitsschaltung mit zwei Relais und einer Ansteuerschaltung gemäß einer sechsten Ausführungsform der Erfindung,
- Fig. 8: ein Schaltbild eines ersten Teils einer Sicherheitsschaltung gemäß einer siebten Ausführungsform der Erfindung, und
- Fig. 9: ein Schaltbild eines zweiten Teils der Sicherheitsschaltung gemäß der siebten Ausführungsform der Erfindung.

Eine erfindungsgemäße Sicherheitsschaltung 1 umfasst ein erstes Relais 10 und ein zweites Relais 11, die mit ihren Arbeitskontakten auf hier nicht dargestellte Weise in einem Strompfad in Reihe geschaltet sind, um eine Sicherheitsfunktion zu realisieren. Über den Strompfad wird beispielsweise ein elektrisches Gerät oder ein elektrische Anlage mit Energie versorgt. Die Relais 10, 11 sind in diesem Ausführungsbeispiel baugleich.

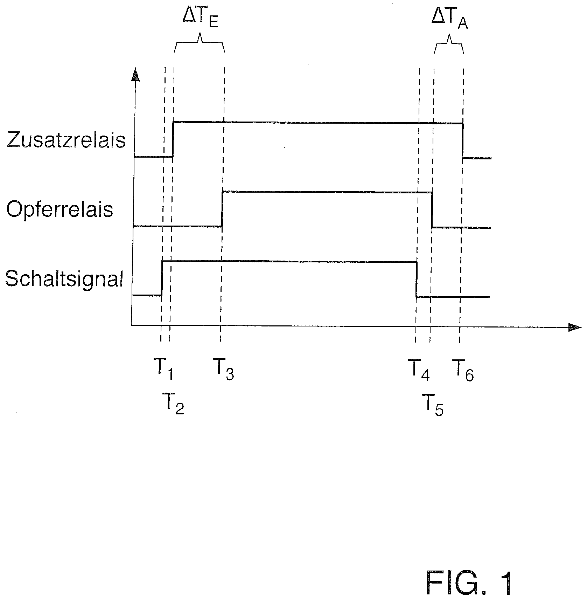

Beim Auslösen der Sicherheitsfunktion wird ein Schaltsignal, das in Figur 1 unten gezeigt ist, an die Sicherheitsschaltung 1 angelegt. Durch das Schaltsignal werden in der Sicherheitsschaltung 1 die Relais 10, 11 gemeinsam gesteuert, um die Sicherheitsfunktion zu realisieren. Die Relais 10, 11 sind entsprechend als Schließer ausgeführt, die bei einem erhöhten Pegel des Schaltsignals ihre Arbeitskontakte schließen und die Versorgung des Geräts bzw. der Anlage ermöglichen.

Die erfindungsgemäße Funktion der Sicherheitsschaltung 1 ist in dem Zeitdiagramm in Fig. 1 gezeigt. Vor dem Zeitpunkt T₁ liegt kein Schaltsignal an, und die Relais 10, 11 sind beide geöffnet, d.h. der Strompfad ist unterbrochen. Zum Zeitpunkt T₁ wird das Schaltsignal an die Sicherheitsschaltung 1 angelegt und bewirkt ein Schalten der beiden Relais 10, 11. Das zweite Relais 11 schaltet zum Zeitpunkt T₂ mit einer technisch bedingten Verzögerung gegenüber dem Zeitpunkt T₁, wodurch die Arbeitskontakte des Zusatzrelais 11 geschlossen werden. Zum Zeitpunkt T₃ schaltet das erste Relais 10, so dass der gesamte Strompfad der Sicherheitsschaltung geschlossen wird. Die Zeitdifferenz zwischen dem Zeitpunkt T₃ und T₂ bildet eine Einschaltverzögerung ΔT_{E}, durch die sichergestellt wird, dass das erste Relais 10 nach dem zweiten Relais 11 schaltet. Beim Auslösen der Sicherheitsfunktion zum Zeitpunkt T₄ sinkt der Pegel des Schaltsignals auf seinen Ausgangswert, das heißt das Ende des Anlegens des Schaltsignals ist erreicht. Zum Zeitpunkt T₅ wird der Versorgungspfad durch das erste Relais 10 getrennt, das heißt die Arbeitskontakte des ersten Relais 10 werden geöffnet. Zum Zeitpunkt T₆ wird zusätzlich der Strompfad durch das zweite Relais 11 unterbrochen. Dies erfolgt mit einer Abschaltverzögerung ΔT_{A}, die sich aus der Zeitdifferenz zwischen T₆ und T₅ ergibt. Die Zeitverzögerungen ΔT_{E} und ΔT_{A} können unabhängig voneinander realisiert werden und sind in diesem Ausführungsbeispiel beispielhaft kombiniert.

Durch das zuvor beschrieben Schaltverhalten schaltet das erste Relais 10 jeweils unter Last und unterliegt einer Abnutzung und einem Verschleiß, während das zweite Relais 11 lastfrei schaltet. Im Weiteren werden daher das erste Relais 10 auch als Opferrelais und das zweite Relais 11 als Zusatzrelais bezeichnet.

Im Weiteren werden mehrere Ausführungsformen beschrieben, um die Einschalt- und/oder Ausschaltverzögerung zu realisieren. Identische Komponenten sind dabei jeweils mit den gleichen Bezugszeichen bzw. Bauteilbezeichnungen versehen und werden nicht jeweils im Detail erläutert.

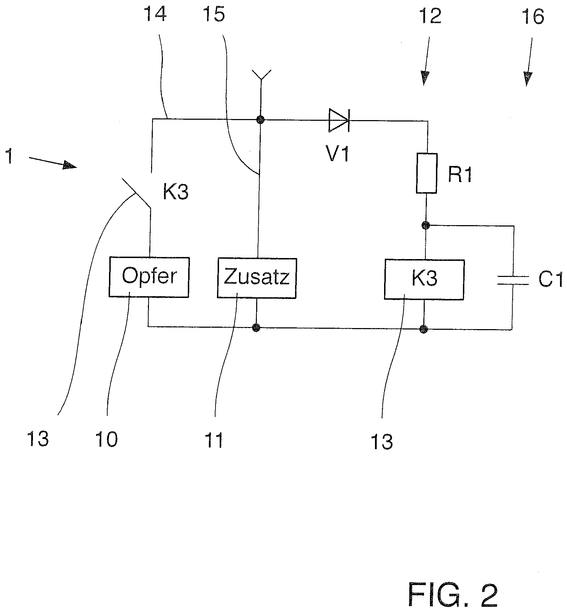

Die Figuren 2 bis 5 betreffen Ausführungsformen der Sicherheitsschaltung 1 mit einer Ansteuerschaltung 12, um zum Zeitpunkt T₁ beim Einschaltvorgang das Schaltsignal an dem Opferrelais 10 gegenüber dem Zusatzrelais 11 mit der Einschaltverzögerung ΔT_{E} anzulegen.

Die Figur 2 zeigt ein erstes Ausführungsbeispiel einer Sicherheitsschaltung 1 mit einer Ansteuerschaltung 12. Die Ansteuerschaltung 12 umfasst ein Hilfsrelais 13 als Schalter, das parallel zu dem Opferrelais 10 und dem Zusatzrelais 11 von dem Schaltsignal gesteuert wird. Das Hilfsrelais 13 ist mit seinen Arbeitskontakten in eine erste Signalleitung 14 für das Schaltsignal zu dem Opferrelais 10 angeordnet, während das Zusatzrelais 11 über eine zweite Signalleitung 15 unmittelbar an das Schaltsignal angeschlossen ist. Die Ansteuerschaltung 12 umfasst weiterhin ein Verzögerungsglied 16, das hier aus einem Widerstand R1 und einem Kondensator C1 gebildet wird. Durch das Verzögerungsglied 16 wird das zum Zeitpunkt T₁ an die Sicherheitsschaltung 1 angelegte Schaltsignal zeitverzögert an dem Hilfsrelais 13 angelegt, so dass das Hilfsrelais 13 zunächst das Anlegen des Schaltsignals an dem Opferrelais 10 unterbindet, während das Zusatzrelais zum Zeitpunkt T₂ schaltet. Erst wenn das Hilfsrelais 13 seine Arbeitskontakte schließt, wird die erste Signalleitung 14 geschlossen und das Schaltsignal liegt auch an dem Opferrelais 10 an, so dass dieses zum Zeitpunkt T₃ seine Arbeitskontakte mit der Einschaltverzögerung ΔT_{E} gegenüber dem Zusatzrelais 11 schließt.

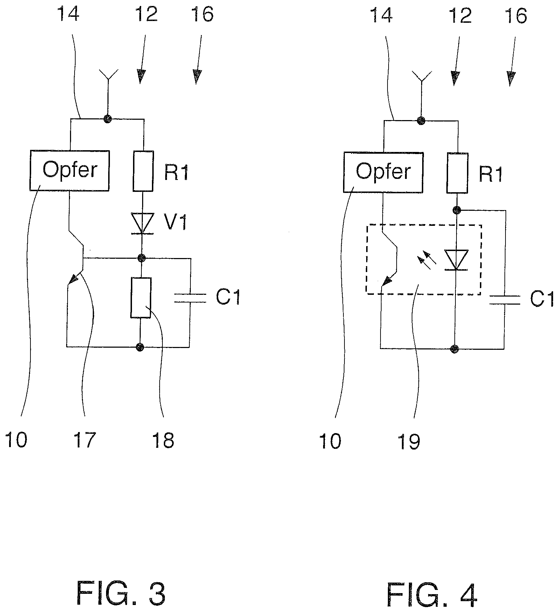

Figur 3 zeigt einen Teil einer Sicherheitsschaltung 1 gemäß einer zweiten Ausführungsform der Erfindung. Die Sicherheitsschaltung 1 ist im Wesentlichen wie zuvor beschrieben ausgeführt und umfasst eine Ansteuerschaltung 12, die ausgeführt ist, beim Anlegen des Schaltsignals eine verzögerte Betätigung des Opferrelais 10 zu bewirken. Die Ansteuerschaltung 12 der zweiten Ausführungsform umfasst wie zuvor beschrieben ein Verzögerungsglied 16 und als Schalter statt des Hilfsrelais 13 einen Transistor 17, der als Bipolartransistor ausgeführt ist, und über einen Arbeitswiderstand 18 angesteuert wird. In einer alternativen Ausführungsform ist der Transistor 17 als Feldeffekttransistor ausgeführt. Die Funktion der Ansteuerschaltung 12 des zweiten Ausführungsbeispiels ist wie zuvor beschrieben.

Figur 4 zeigt einen Teil einer Sicherheitsschaltung 1 gemäß einer dritten Ausführungsform der Erfindung. Die Sicherheitsschaltung 1 ist im Wesentlichen wie zuvor beschrieben ausgeführt und umfasst eine Ansteuerschaltung 12, die wie zuvor beschrieben ebenfalls ein Verzögerungsglied 16 aufweist. Als Schalter ist in der Ansteuerschaltung 12 der dritten Ausführungsform statt des Hilfsrelais 13 der ersten Ausführungsform einen Optokoppler 19 verwendet, so dass eine galvanische Trennung zwischen einer ersten Signalleitung 14 des Opferrelais 10 und dem Verzögerungsglied 16 möglich ist. Die Funktion der Ansteuerschaltung 12 der dritten Ausführungsform ist identisch mit den zuvor beschriebenen.

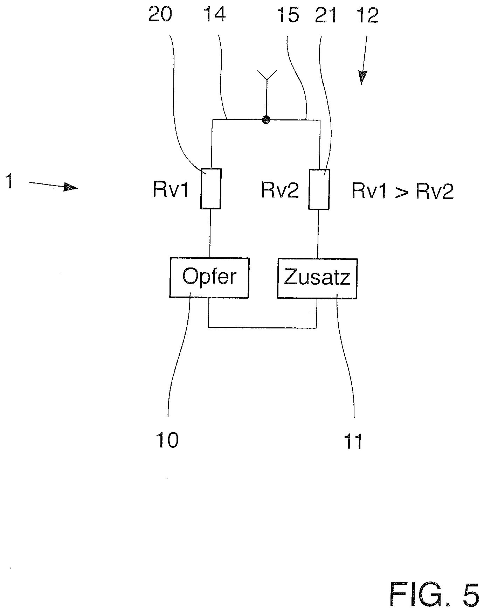

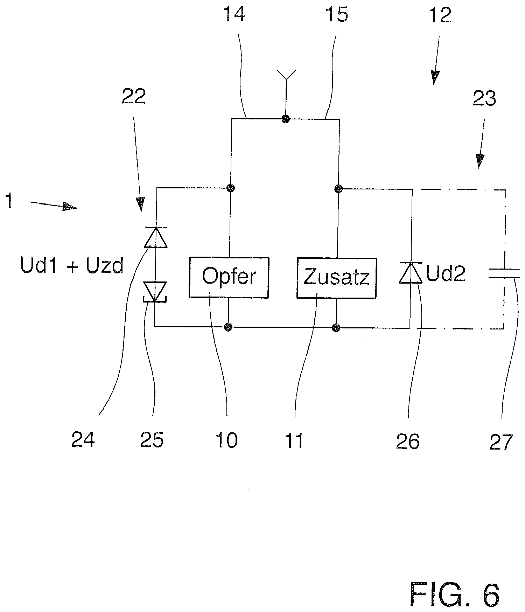

Die Figuren 5 und 6 betreffen Ausführungsformen der Sicherheitsschaltung 1 mit einer Ansteuerschaltung 12, die ausgeführt sind, um zum Zeitpunkt T₄ beim Auslösen der Sicherheitsfunktion das Ende des Anlegens des Schaltsignals an dem zweiten Relais gegenüber dem ersten Relais zu verzögern. Somit wird durch die vierte bzw. fünfte Ausführungsform die Abschaltverzögerung ΔT_{A} realisiert.

Figur 5 zeigt eine Sicherheitsschaltung 1 gemäß einer vierten Ausführungsform der Erfindung. Die Sicherheitsschaltung 1 ist im Wesentlichen wie zuvor beschrieben ausgeführt und umfasst eine Ansteuerschaltung 12, die ausgeführt ist, beim Abschaltvorgang, das heißt zum Zeitpunkt T₄ am Ende des Anlegens des Schaltsignals, das Zusatzrelais 11 mit einer Abschaltverzögerung ΔT_{A} gegenüber dem Opferrelais 10 zu schalten. Gemäß der vierten Ausführungsform der Erfindung ist die Ansteuerschaltung 12 ausgeführt, das Ende des Anlegens des Schaltsignals an dem Zusatzrelais 11 gegenüber dem Opferrelais 10 zu verzögern. Dazu umfasst die Ansteuerschaltung 12 dieser Ausführungsform einen ersten und einen zweiten Vorwiderstand 20, 21, die entsprechend in der ersten und zweiten Signalleitung 14, 15 für das Schaltsignal zu den Relais 10, 11 angeordnet sind. Der erste Vorwiderstand 20 ist größer gewählt als der zweite Vorwiderstand 21, wodurch der Strom durch das Opferrelais 10 geringer ist als der durch das Zusatzrelais 11, und das Opferrelais 10 schneller auf den zum Zeitpunkt T₄ abgesenkten Spannungspegel des Schaltsignals reagiert und zum Zeitpunkt T₅ den Schaltvorgang zum Öffnen seiner Arbeitskontakte auslöst, während das Zusatzrelais 11 zeitverzögert zum Zeitpunkt T₆ schaltet.

Figur 6 zeigt eine Sicherheitsschaltung 1 gemäß einer fünften Ausführungsform der Erfindung. Die Sicherheitsschaltung 1 ist im Wesentlichen wie unter Bezug auf die in Fig. 5 gezeigte Ausführungsform ausgeführt, beim Ausschalten des Schaltsignals das Zusatzrelais 11 mit der Abschaltverzögerung ΔT_{A} gegenüber dem Opferrelais 10 zu schalten. Die Sicherheitsschaltung 1 der fünften Ausführungsform umfasst eine Ansteuerschaltung 12 mit einer ersten Freilaufschaltung 22 und einer zweite Freilaufschaltung 23, die entsprechend parallel zu dem ersten und zweiten Relais 10, 11 angeordnet sind. Die erste Freilaufschaltung 22 umfasst entgegengesetzt orientiert eine erste Freilaufdiode 24 und eine Zenerdiode 25, während die zweite Freilaufschaltung 23 hier eine zweite Freilaufdiode 25 umfasst. Die erste Freilaufschaltung 22 und die zweite Freilaufschaltung 23 sind derart ausgelegt, dass die Summe der Diodenspannung Ud₁ und der Zenerspannung Uzd an der ersten Freilaufdiode 24 und der Zenerdiode 25 größer ist als die Diodenspannung Ud₂ der zweiten Freilaufdiode 26, wodurch die erste Freilaufschaltung 22 schneller als die zweite Freilaufschaltung 23 ausgeführt ist. In einer weiteren Ausführungsform umfasst die zweite Freilaufschaltung 22 einen Kondensator 27 als Energiespeicher, der parallel zu der zweiten Freilaufdiode 26 angeordnet ist, um das Schaltsignal an dem Zusatzrelais 11 zu puffern.

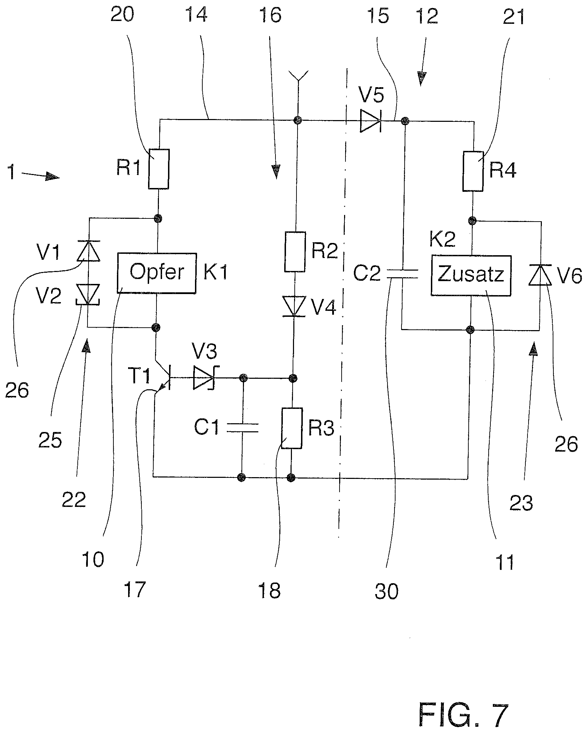

Figur 7 zeigt eine Sicherheitsschaltung 1 gemäß einer sechsten Ausführungsform der Erfindung. Die Sicherheitsschaltung 1 der sechsten Ausführungsform umfasst eine Ansteuerschaltung 12, die eine Kombination der Ansteuerschaltungen 12 der zweiten Ausführungsform gemäß Figur 3, der vierten Ausführungsform gemäß Figur 5 und der fünften Ausführungsform gemäß Figur 6 darstellt. Entsprechend ist die Ansteuerschaltung 12 ausgeführt, beim Anlegen des Schaltsignals das Opferrelais 10 mit der Einschaltverzögerung ΔT_{E} nach dem Zusatzrelais 11 zu schalten, und beim Ausschalten das Zusatzrelais 11 mit der Abschaltverzögerung ΔT_{A} nach dem Opferrelais 10 zu schalten.

Die Ansteuerschaltung 12 der sechsten Ausführungsform umfasst ein Verzögerungsglied 16, das hier aus Widerstand R2 und Kondensator C1 gebildet ist, sowie einen Transistor 17 mit einem Arbeitswiderstand 18 in Übereinstimmung mit dem unter Bezug auf Figur 3 beschriebenen zweiten Ausführungsbeispiel der Erfindung. Zusätzlich umfasst die Ansteuerschaltung 12 eine erste und eine zweite Freilaufschaltung 22, 23 in Übereinstimmung mit der unter Bezug auf Figur 6 beschriebenen fünften Ausführungsform der Erfindung.

Im Weiteren wir die Funktion der Sicherheitsschaltung der sechsten Ausführungsform beschrieben. Beim Anlegen des Schaltsignals sorgt ein Speicherkondensator 30 für einen gleichsinnigen Hochlauf der Spannung in der Ansteuerschaltung 12. Das Verzögerungsglied 16 sorgt für ein verzögertes Ansteigen der Spannung an der Basis-Emitter-Strecke des Transistors 17. Über eine Diode V3 und den Arbeitswiderstand 18 wird die zeitliche Verzögerung des Transistors 17 eingestellt. Als Folge der Verzögerung schaltet das Opferrelais 10 zeitverzögert ein. Beim Auslösen der Sicherheitsfunktion, also an Ende des Anlegens des Schaltsignals, puffert der Speicherkondensator 30 das Zusatzrelais 11 mit Energie. Eine Diode V5 sorgt dafür, dass die Energie aus dem Speicherkondensator 30 ausschließlich über das Zusatzrelais abfließt. Das Zusatzrelais 11 bleibt dadurch noch angezogen, bis die Energie aus dem Speicherkondensator 30 verbraucht ist. Die Energie in dem Kondensator C1 des Verzögerungsglieds 16 wird über R3 schnell verbraucht, sodass der Transistors 17 nahezu ohne Verzögerung abschaltet und sperrt, wodurch die Spannung an dem Opferrelais 10 absinkt und es seine Arbeitskontakte öffnet. Die aus der ersten Freilaufdiode 24 und der Zenerdiode 25 gebildete schnelle erste Freilaufbeschaltung 22 unterstützt das schnelle Abschalten des Opferrelais 10, während die zweite Freilaufschaltung 23 mit der zweiten Freilaufdiode 25 langsam ausgeführt ist. Der erste und der zweite Vorwiderstand 20, 21 bilden eine Leistungsabsenkung der Spulen der Relais 10, 11, wobei der erste Vorwiderstand 20 größer als der zweite Vorwiderstand 21 ist.

Im Übrigen wird hinsichtlich der Funktion der Ansteuerschaltung 12 der sechsten Ausführungsform auf die entsprechenden Ausführungen in Bezug auf die zweite, die vierte und die fünfte Ausführungsform verwiesen.

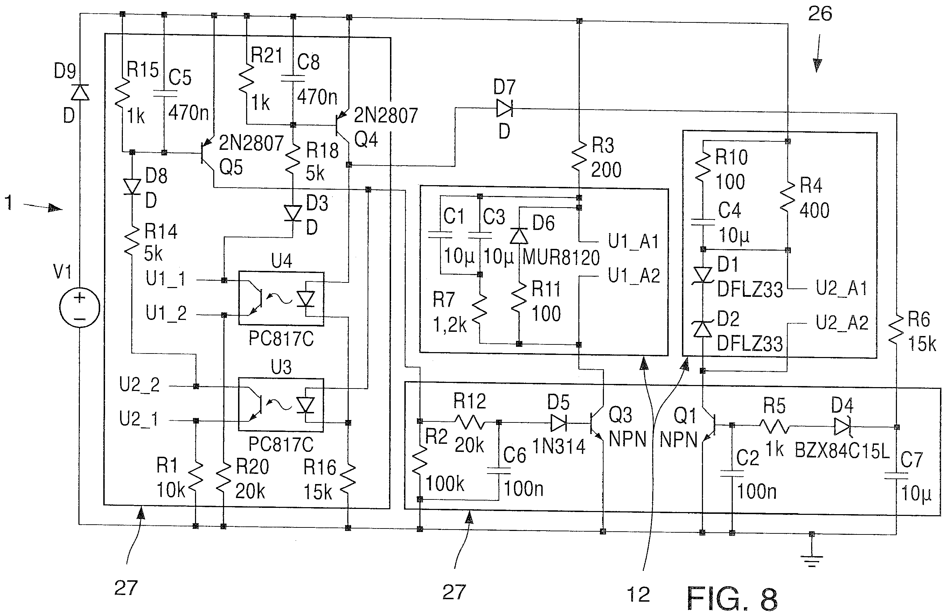

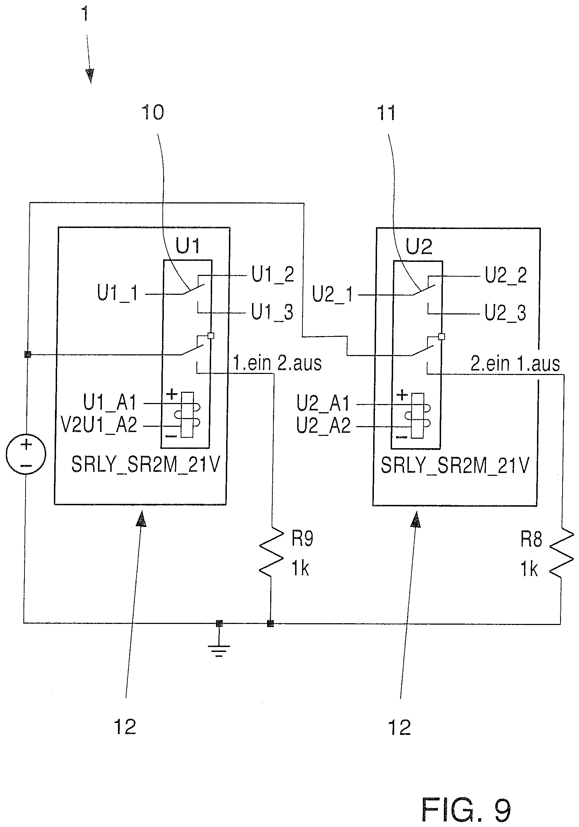

Die Figuren 8 und 9 zeigen ein konkretes Schaltungsbeispiel einer erfindungsgemäßen Sicherheitsschaltung 1 gemäß einer siebten Ausführungsform der Erfindung. Die Sicherheitsschaltung 1 umfasst eine Schaltung 28, welche eine Diagnoseschaltung 29 und die aus dem Prinzipschaltbild aus Figur 7 bekannte Ansteuerschaltung 12 gemäß der sechsten Ausführungsform umfasst. Die Funktion der Ansteuerschaltung 12 der siebten Ausführungsform ist wie die der unter Bezug auf Figur 7 und das sechste Ausführungsbeispiel beschriebenen Ansteuerschaltung 12. Die Diagnoseschaltung 29 ist ausgeführt, Öffnerkontakte der zwangsgeführten Relais 10, 11 zu überprüfen und das jeweils andere diversitäre oder redundante Relais (10, 11) einzuschalten.

Wie sich aus den zuvor beschriebenen Ausführungsbeispielen ergibt, ist die Ansteuerschaltung 12 jeweils als Analogschaltung ausgeführt, die aus einfachen Bauteilen im Sinne der IEC 61508 aufgebaut ist. Außerdem ist das Opferrelais 10 derart ausgeführt und angeordnet, dass es schnell und einfach austauschbar ist.

Ein hier nicht gezeigtes Sicherheitsschaltgerät umfasst eine der oben beschriebenen Sicherheitsschaltungen 1.

### Bezugszeichenliste

| | |
|---|---|
| Sicherheitsschaltung | 1 |
| erstes Relais, Opferrelais | 10 |
| zweites Relais, Zusatzrelais | 11 |
| Ansteuerschaltung | 12 |
| Hilfsrelais, Schalter | 13 |
| erste Signalleitung | 14 |
| zweite Signalleitung | 15 |
| Verzögerungsglied | 16 |
| Transistor, Schalter | 17 |
| Arbeitswiderstand | 18 |
| Optokoppler, Schalter | 19 |
| erster Vorwiderstand | 20 |
| zweiter Vorwiderstand | 21 |
| erste Freilaufschaltung | 22 |
| zweite Freilaufschaltung | 23 |
| erste Freilaufdiode | 24 |
| Zenerdiode | 25 |
| zweite Freilaufdiode | 26 |
| Kondensator, Energiespeicher | 27 |
| Schaltung | 28 |
| Diagnoseschaltung | 29 |
| Speicherkondensator, Energiespeicher | 30 |

## Patentansprüche

1. Sicherheitsschaltung (1) zur Realisierung einer Sicherheitsfunktion mit einem ersten und einem zweiten Relais (10, 11), deren Kontakte in Reihe geschaltet sind, wobei
die Sicherheitsschaltung (1) ausgeführt ist, die Relais (10, 11) über ein gemeinsames Schaltsignal zu steuern, um die Sicherheitsfunktion zu realisieren,
die Sicherheitsschaltung (1) ausgeführt ist, beim Ende des Anlegens des Schaltsignals das zweite Relais (11) mit einer Abschaltverzögerung (ΔT_{A}) gegenüber dem ersten Relais (10) zu schalten, und
die Sicherheitsschaltung (1) eine Ansteuerschaltung (12) umfasst, die ausgeführt ist, das Ende des Anlegens des Schaltsignals an dem zweiten Relais (11) gegenüber dem ersten Relais (10) zu verzögern, wobei die Ansteuerschaltung (12) eine erste und eine zweite Freilaufschaltung (22, 23) umfasst, die entsprechend parallel zu dem ersten und zweiten Relais (10, 11) angeordnet sind, **dadurch gekennzeichnet, dass** die erste Freilaufschaltung (22) schneller als die zweite Freilaufschaltung (23) ausgeführt ist.

2. Sicherheitsschaltung (1) nach Anspruch 1,
**dadurch gekennzeichnet, dass**
das erste und das zweite Relais (10, 11) derart ausgeführt sind, dass das erste Relais (10) einen Schaltvorgang beim Ende des Anlegens des Schaltsignals schneller durchführt als das zweite Relais (11).

3. Sicherheitsschaltung (1) nach einem der vorhergehenden Ansprüche 1 oder 2,
**dadurch gekennzeichnet, dass**
die Ansteuerschaltung (12) einen ersten und einen zweiten Vorwiderstand (20, 21) umfasst, die entsprechend in Signalleitungen (14, 15) für das Schaltsignal zu dem ersten und zweiten Relais (10, 11) angeordnet sind, wobei der erste Vorwiderstand (20) größer als der zweite Vorwiderstand (21) ist.

4. Sicherheitsschaltung (1) nach einem der vorhergehenden Ansprüche 1 bis 3,
**dadurch gekennzeichnet, dass**
die Ansteuerschaltung (12) einen Energiespeicher (27, 30) umfasst, der ausgeführt und angeordnet ist, um das Schaltsignal an dem zweiten Relais (11) zu puffern.

5. Sicherheitsschaltung (1) nach einem der vorhergehenden Ansprüche 1 bis 4,
**dadurch gekennzeichnet, dass**
die Sicherheitsschaltung (1) ausgeführt ist, beim Anlegen des Schaltsignals das erste Relais (10) mit einer Einschaltverzögerung (ΔT_{E}) gegenüber dem zweiten Relais (11) zu schalten.

6. Sicherheitsschaltung (1) nach Anspruch 5,
**dadurch gekennzeichnet, dass**
die Sicherheitsschaltung (1) eine Ansteuerschaltung (12) umfasst, die ausgeführt ist, das Schaltsignal an dem ersten Relais (10) gegenüber dem zweiten Relais (11) mit der Einschaltverzögerung ΔT_{E} anzulegen.

7. Sicherheitsschaltung (1) nach Anspruch 6,
**dadurch gekennzeichnet, dass**
die Ansteuerschaltung (12) einen elektrischen Schalter (13, 17, 19) und ein Verzögerungsglied (16) aufweist und ausgeführt ist, den elektrischen Schalter (13, 17, 19) über das Verzögerungsglied (16) zeitverzögert durch das Schaltsignal zu steuern, wobei
der elektrische Schalter (13, 17, 19) in einer ersten Signalleitung (14) des Schaltsignals zu dem ersten Relais (10) angeordnet ist.

8. Sicherheitsschaltung (1) nach Anspruch 7,
**dadurch gekennzeichnet, dass**
der elektrische Schalter einen Transistor (17), insbesondere ein Feldeffekttransistor, umfasst.

9. Sicherheitsschaltung (1) nach einem der vorhergehenden Ansprüche 7 oder 8,
**dadurch gekennzeichnet, dass**
der elektrische Schalter einen Optokoppler (19) umfasst.

10. Sicherheitsschaltung (1) nach Anspruch 7,
**dadurch gekennzeichnet, dass**
der elektrische Schalter als Hilfsrelais (13) ausgeführt ist.

11. Sicherheitsschaltung nach einem der vorhergehenden Ansprüche 1 bis 10,
**dadurch gekennzeichnet, dass**
die Ansteuerschaltung (12) als Analogschaltung ausgeführt ist, die insbesondere aus einfachen Bauteilen im Sinne der IEC 61508 aufgebaut ist.

12. Sicherheitsschaltung (1) nach einem der vorhergehenden Ansprüche,
**dadurch gekennzeichnet, dass**
das erste Relais (10) derart ausgeführt und angeordnet ist, dass es schnell und einfach austauschbar ist.

13. Sicherheitsschaltgerät mit einer Sicherheitsschaltung (1) nach einem der vorhergehenden Ansprüche.

## Claims

1. A safety circuit (1) for realizing a safety function having a first and a second relay (10, 11), the contacts of which are switched in series, wherein
the safety circuit (1) is embodied to control the relays (10, 11) via a common switch signal in order to realize the safety function,
the safety circuit (1) is embodied to switch the second relay (11) with a shut-down delay (ΔT_{A}) relative to the first relay (10) at the end of the application of the switch signal, and,
the safety circuit (1) comprises a trigger circuit (12) that is embodied to delay the end of the application of the switch signal on the second relay (11) relative to the first relay (10),
wherein
the trigger circuit (12) comprises a first and a second freewheel circuit (22, 23), the latter being arranged correspondingly parallel to the first and second relays (10, 11), **characterized in that** the first freewheel circuit (22) is embodied faster than the second freewheel circuit (23).

2. The safety circuit (1) according to claim 1,
**characterized in that**
the first and the second relay (10, 11) are embodied such that the first relay (10) performs a switching process at the end of the application of the switch signal faster than the second relay (11).

3. The safety circuit (1) according to any of the preceding claims 1 or 2,
**characterized in that**
the trigger circuit (12) comprises a first and a second dropping resistor (20, 21), the latter being arranged correspondingly in signal lines (14, 15) for the switch signal to the first and second relays (10, 11), wherein the first dropping resistor (20) is larger than the second dropping resistor (21).

4. The safety circuit (1) according to any of the preceding claims 1 through 3,
**characterized in that**
the trigger circuit (12) comprises an energy storage unit (27, 30) that is embodied and arranged to buffer the switch signal on the second relay (11).

5. The safety circuit (1) according to any of the preceding claims 1 through 4,
**characterized in that**
the safety circuit (1) is embodied, when the switch signal is applied, to switch the first relay (10) with a start delay (ΔT_{R}) relative to the second relay (11).

6. The safety circuit (1) according to claim 5,
**characterized in that**
the safety circuit (1) comprises a trigger circuit (12) that is embodied to apply the switch signal to the first relay (10) with the start delay (ΔT_{R}) relative to the second relay (11).

7. The safety circuit (1) according to claim 6,
**characterized in that**
the trigger circuit (12) has an electrical switch (13, 17, 19) and a delay element (16) and is embodied to control the electrical switch (13, 17, 19) via the delay element (16) in a time-delayed manner using the switch signal, wherein
the electrical switch (13, 17, 19) is arranged in a first signal line (14) of the switch signal to the first relay (10).

8. The safety circuit (1) according to claim 7,
**characterized in that**
the electrical switch comprises a transistor (17), especially a field effect transistor.

9. The safety circuit (1) according to either of the preceding claims 7 or 8,
**characterized in that**
the electrical switch comprises an optocoupler (19).

10. The safety circuit (1) according to claim 7,
**characterized in that**
the electrical switch is embodied as an auxiliary relay (13).

11. The safety circuit according to any of the preceding claims 1 through 10,
**characterized in that**
the trigger circuit (12) is embodied as an analog circuit that in particular is constructed from simple components in the context of IEC 61508.

12. The safety circuit (1) according to any of the preceding claims,
**characterized in that**
the first relay (10) is embodied and arranged such that it may be exchanged rapidly and simply.

13. A safety switching device having a safety circuit (1) according to any of the preceding claims.

## Revendications

1. Circuit de sécurité (1) destiné à la réalisation d'une fonction de sécurité avec un premier et un deuxième relais (10, 11) dont les contacts sont branchés en série, où
le circuit de sécurité (1) est conçu pour commander les relais (10, 11) par le biais d'un signal de commutation commun afin de réaliser la fonction de sécurité,
le circuit de sécurité (1) est conçu, à la fin de la mise en place du signal de commutation, pour brancher le deuxième relais (11) avec un retard de désactivation (Δ_{TA}) par rapport au premier relais (10), et
le circuit de sécurité (1) comprend un circuit de démarrage (12), qui est conçu pour différer la fin de la mise en place du signal de commutation au niveau du deuxième relais (11) par rapport au premier relais (10),
où le circuit de démarrage (12) comprend un premier et un deuxième circuits en roue libre (22, 23) qui sont disposés de manière correspondante en parallèle par rapport au premier et au deuxième relais (10, 11),
**caractérisé en ce que**
le premier circuit en roue libre (22) est conçu plus rapide que le deuxième circuit en roue libre (23).

2. Circuit de sécurité (1) selon la revendication 1,
**caractérisé en ce que**
le premier et le deuxième relais (10, 11) sont conçus de telle manière que le premier relais (10) effectue plus rapidement un processus de commutation à la fin de la mise en place du signal de commutation que le deuxième relais (11).

3. Circuit de sécurité (1) selon l'une des revendications précédentes 1 ou 2,
**caractérisé en ce que**
le circuit de démarrage (12) comprend une première et une deuxième résistances additionnelles (20, 21), qui sont disposées de manière correspondante dans des lignes de signalisation (14, 15) pour le signal de commutation vers le premier et le deuxième relais (10, 11), où la première résistance additionnelle (20) est supérieure à la deuxième résistance additionnelle (21).

4. Circuit de sécurité (1) selon l'une des revendications précédentes 1 à 3,
**caractérisé en ce que**
le circuit de démarrage (12) comprend un accumulateur d'énergie (27, 30) qui est conçu et disposé pour exercer un effet tampon sur le signal de commutation au niveau du deuxième relais (11).

5. Circuit de sécurité (1) selon l'une des revendications précédentes 1 à 4,
**caractérisé en ce que**
le circuit de sécurité (1) est conçu pour, lors de la mise en place du signal de commutation, brancher le premier relais (10) avec un retard d'activation (ΔT_{E}) par rapport au deuxième relais (11).

6. Circuit de sécurité (1) selon la revendication 5,
**caractérisé en ce que**
le circuit de sécurité (1) comprend un circuit de démarrage (12) qui est conçu pour mettre en place le signal de commutation au niveau du premier relais (10) avec un retard d'activation ΔT_{E} par rapport au deuxième relais (11).

7. Circuit de sécurité (1) selon la revendication 6,
**caractérisé en ce que**
le circuit de démarrage (12) présente un commutateur électrique (13, 17, 19) et un élément de retard (16) et est conçu pour commander de manière retardée dans le temps, par le signal de commutation, le commutateur électrique (13, 17, 19) par le biais de l'élément de retard (16), où
le commutateur électrique (13, 17, 19) est disposé dans une première ligne de signalisation (14) du signal de commutation vers le premier relais (10).

8. Circuit de sécurité (1) selon la revendication 7,
**caractérisé en ce que**
le commutateur électrique comprend un transistor (17), notamment, un transistor à effet de champ.

9. Circuit de sécurité (1) selon l'une des revendications précédentes 7 ou 8,
**caractérisé en ce que**
le commutateur électrique comprend un photocoupleur (19).

10. Circuit de sécurité (1) selon la revendication 7,
**caractérisé en ce que**
le commutateur électrique est conçu sous la forme d'un relais auxiliaire (13).

11. Circuit de sécurité (1) selon l'une des revendications précédentes 1 à 10,
**caractérisé en ce que**
le circuit de démarrage (12) est conçu sous forme d'un circuit analogique, qui est construit en particulier à partir de composants simples selon la norme CEI 61508.

12. Circuit de sécurité (1) selon l'une des revendications précédentes,
**caractérisé en ce que**
le premier relais (10) est conçu et disposé de telle manière qu'il est rapidement et facilement échangeable.

13. Appareil de commutation de sécurité doté d'un circuit de sécurité (1) selon l'une des revendications précédentes.
